# EUROPÄISCHE PATENTANMELDUNG

(11) **EP 1 873 049 A1**
(43) Veröffentlichungstag der Anmeldung: **02.01.2008**
(21) Anmeldenummer: 07019772.8
(22) Anmeldetag: 30.09.2005
(51) Int. Cl.: B62K 27/14, F16C 11/06, F16C 23/04, F16C 17/08

(54) **Gelenkanordnung**

(30) Priorität: 15.03.2005 CH 439052005
(62) Teilanmeldung aus: 05786740.0
(71) Anmelder: Smike AG, 6003 Luzern (CH)
(72) Erfinder: Schiess, Albert, 8640 Rapperswil (CH)
(74) Vertreter: Schalch, Rainer

(57) **Zusammenfassung**

Die Erfindung betrifft eine Gelenkanordnung zum Verbinden eines Zweirads mit einem Seitenwagen. Die Gelenkanordnung umfasst einen Lagerbolzen, der in einem winkeltoleranten Radiallager um einen Neigungsdrehpunkt herum neigbar und axial verschieblich drehgelagert ist und der an seiner Stirnfläche einen Lagerteil eines einseitig wirkenden Axiallagers bildet. Der Lagerbolzen ist entgegen der Tragrichtung des Axiallagers aus dem Radiallager entfernbar, so dass die Gelenkverbindung auf einfache weise aufgehoben werden kann. Das Axiallager der Gelenkanordnung ist ausserhalb der Radiallagers angeordnet und als Gleitlager mit sphärischen Gleitflächen ausgebildet, wobei das Zentrum der sphärischen Wölbung der Gleitflächen mit dem Neigungsdrehpunkt des Radiallagers zusammenfällt.

Durch die erfindungsgemässe Gelenkanordnung wird es möglich, ein Zweirad mit einem Seitenwagen auf robuste und sichere Weise derart zu verbinden, dass das Zweirad gegenüber dem Seitenwagen neigbar ist, wobei immer die volle Tragfähigkeit in jeder Traglastrichtung gegeben ist, und eine Montage und Demontage des Seitenwagens problemlos durch eine einzelne Person möglich ist.

## Beschreibung

### Hinweis auf verwandte Anmeldungen

Diese Anmeldung ist eine Teilanmeldung aus der Stammanmeldung Nr. 05786740.0 und beansprucht die Priorität der Schweizer Patentanmeldung Nr. 439/05, die am 15. März 2005 eingereicht wurde und deren ganze Offenbarung hiermit durch Bezug aufgenommen wird.

### Technisches Gebiet

Die Erfindung betrifft eine Gelenkanordnung zum Verbinden eines Zweirads mit einem Seitenwagen gemäss dem Oberbegriff von Patentanspruch 1.

### Stand der Technik

Aus dem Stand der Technik sind Fahrräder und Motorräder mit Seitenwagen bekannt, bei denen das Fahrrad oder Motorrad entweder starr mit dem Seitenwagen verbunden ist oder gegenüber dem Seitenwagen geneigt werden kann, z.B. zur Erleichterung des Kurvenfahrens. Im letztgenannten Fall wird die Verbindung zwischen dem Zweirad und dem Seitenwagen durch eine oder mehrere Gelenkanordnungen hergestellt, welche ein Neigen des Zweirads gegenüber dem Seitenwagen zulassen und zudem der Übertragung von in Zweiradlängsrichtung wirkenden Axialkräften zwischen Zweirad und Seitenwagen dienen. Dabei sind die Gelenkanordnungen als winkelsteife Drehgelenke ausgebildet, über welche auch die Axialkräfte zwischen Zweirad und Seitenwagen übertragen werden. Hierdurch ergibt sich eine einfache und sichere Verbindung zwischen dem Zweirad und dem Seitenwagen, welche jedoch den Nachteil aufweist, dass es bei einer Verformung der Strukturen von Zweirad und/oder Seitenwagen im Betrieb zu einer Überlastung der Gelenke kommen kann und eine Montage und Demontage des Seitenwagens schwierig und durch eine einzelne Person kaum zu bewerkstelligen ist, da hierzu die Achsen der Drehgelenke exakt zueinander ausgerichtet sein müssen.

### Darstellung der Erfindung

Es stellt sich daher die Aufgabe, eine Gelenkanordnung zum Verbinden eines Zweirads mit einem Seitenwagen zur Verfügung zu stellen, welche die Nachteile des Standes der Technik nicht aufweist oder zumindest teilweise vermeidet.

Diese Aufgabe wird von der Gelenkanordnung gemäss Patentanspruch 1 gelöst.

Die erfindungsgemässe Gelenkanordnung eignet sich zum Verbinden eines Zweirads mit einem Seitenwagen zu einem Zweirad mit Seitenwagen mit den folgenden Merkmalen:

Das Zweirad ist mit dem Seitenwagen über zwei winkeltolerante Gelenkanordnungen verbunden, welche als kombinierte Radial- und Axiallager ausgebildet sind. "Winkeltolerant" bedeutet hier, dass eine Neigung der Drehachse des Radiallagers der jeweiligen Gelenkanordnung um einen Neigungsdrehpunkt herum von einer Nulllage aus um mindestens 2° möglich ist, ohne dass hierdurch das Lager beschädigt wird. Bevorzugterweise ist eine solche Neigung möglich, ohne dass das Lager dieser nennenswerte Rückstellkräfte entgegensetzt. Die Gelenkanordnungen sind in Zweiradlängsrichtung gesehen mit einem Abstand voneinander angeordnet, so dass sie eine im wesentlichen in Zweiradlängsrichtung verlaufende Neigungsachse für die Neigung des Zweirads gegenüber dem Seitenwagen bilden. Gleichzeitig dienen die beiden Gelenkanordnungen dazu, die in Zweiradlängsrichtung wirkenden Axialkräfte zwischen dem Zweirad und dem Seitenwagen, wie sie z.B. beim Beschleunigen oder Abbremsen des Zweirades im Betrieb auftreten, zu übertragen. Dabei sind die beiden Gelenkanordnungen derartig ausgebildet und miteinander kombiniert, dass jede Gelenkanordnung die Axialkräfte nur in einer der beiden Kraftrichtungen in Zweiradlängsrichtung übertragen kann und die Übertragung in der anderen Kraftrichtung von der anderen Gelenkanordnung übernommen wird. Die beiden Gelenkanordnungen wirken also zur Übertragung von Axialkräften derartig zusammen, dass eine Übertragung von in Fahrtrichtung wirkenden Axialkräften von dem Zweirad auf den Seitenwagen ausschliesslich durch eine erste der beiden Gelenkanordnungen erfolgt, während eine Übertragung von in Fahrtrichtung wirkenden Axialkräften vom Seitenwagen auf das Zweirad ausschliesslich durch die zweite Gelenkanordnung erfolgt.

Hierdurch wird es möglich, die Strukturen von Seitenwagen und Zweirad mittels zweier winkeltoleranter Gelenkanordnungen derartig miteinander zu verbinden, dass in allen Tragrichtungen eine hohe Tragfähigkeit erreicht wird und diese gleichzeitig einfach zu koppeln bzw. zu trennen sind. Es wird somit ein äusserst robustes und wartungsarmes Zweirad mit Seitenwagen zur Verfügung gestellt, bei dem der Seitenwagen problemlos durch eine einzige Person montiert und demontiert werden kann.

In einer bevorzugten Ausführungsform des Zweirads mit Seitenwagen ist die in Fahrtrichtung gesehen vordere Gelenkanordnung derartig ausgestaltet, dass sie in Fahrtrichtung wirkende Axialkräfte ausschliesslich von dem Zweirad auf den Seitenwagen und entgegen der Fahrtrichtung wirkende Axialkräfte ausschliesslich vom Seitenwagen auf das Zweirad übertragen kann. Entsprechend ist die in Fahrtrichtung gesehen hintere Gelenkanordnung derartig ausgebildet, dass diese in Fahrtrichtung wirkende Axialkräfte ausschliesslich vom Seitenwagen auf das Zweirad und entgegen der Fahrtrichtung wirkende Axialkräfte ausschliesslich vom Zweirad auf den Seitenwagen übertragen kann. Beim Beschleunigen werden die Axialkräfte zwischen Zweirad und Seitenwagen also von der vorderen Gelenkeinheit übertragen, beim Abbremsen von der hinteren.

In einer weiteren bevorzugten Ausführungsform sind die Gelenkanordnungen derartig ausgestaltet, dass ihre Radiallager im Betrieb jederzeit frei von Axialkräften sind. Die Radiallagerung ist also konstruktiv derartig ausgeführt, dass eine Einleitung von axialen Kräften in die Radiallager nicht möglich ist. Hierdurch wird es möglich, sowohl das Radial- als auch das Axiallager optimal bezüglich Lebensdauer und Traglasten auszulegen. Zudem kann auf enge Fertigungstoleranzen verzichtet werden, was eine Senkung der Fertigungskosten in Aussicht stellt.

In noch einer weiteren bevorzugten Ausführungsform sind die Radiallager der Gelenkanordnungen als Gleitlager mit einer neigbaren Lagerbuchse ausgebildet, welche bevorzugterweise aus einem Kunststoff besteht. Eine solche Ausbildung ist kostengünstig und eignet sich in besonderer Weise für die Radiallagerung zwischen Zweirad und Seitenwagen, welche lediglich kleine Drehwinkel ausführen muss, aber relativ stossbelastet ist.

Dabei ist es von Vorteil, wenn in der neigbaren Lagerbuchse ein bevorzugterweise zylindrischer Lagerbolzen gelagert ist, dessen Stirnseite zur Übertragung der Axialkräfte dient. Auf diese Weise lassen sich konstruktiv einfach aufgebaute erfindungsgemässe Gelenkanordnungen bereitstellen.

Wird dabei auch das Axiallager als Gleitlager, bevorzugterweise mit einer Kunststoffgleitpaarung, ausgebildet, so ergibt sich zusätzlich der Vorteil, dass eine robuste, schmierungsfreie Lagerung möglich wird, deren Verschleissteile zudem kostengünstig in der Herstellung und einfach auszutauschen sind.

Dabei sind bei einer weiteren bevorzugten Ausführungsform, bei der die Radiallager der Gelenkanordnungen als Gleitlager mit neigbarer Lagerbuchse ausgebildet sind, diese Radiallagerbuchsen jeweils um einen Neigungsdrehpunkt herum neigbar, was bevorzugterweise dadurch erreicht wird, dass die Lagerbuchsen sphärisch geformte Aussenflächen aufweisen, mit denen sie jeweils in entsprechend geformten Aufnahmeteilen gelagert sind. Die Axiallager weisen ebenfalls sphärisch gewölbte Gleitflächen auf, deren Wölbungszentrum mit dem Neigungsdrehpunkt der zugehörigen Radiallagerbuchse zusammenfällt. Hierdurch lässt sich gewährleisten, dass unabhängig von der Neigung der Drehachse des Radiallagers immer die volle Tragfähigkeit in radialer wie in axialer Richtung gegeben ist.

Ist dabei der Radius der Wölbung der sphärisch geformten Aussenflächen der Radiallagerbuchse kleiner als der Radius der Gleitflächen des zugehörigen Axiallagers, was bevorzugt ist, so findet eine klare Trennung zwischen den radialen und den axialen Lagerflächen statt.

In noch einer weiteren bevorzugten Ausführung des Zweirades mit Seitenwagen sind beide Gelenkanordnungen konstruktiv identisch ausgebildet, verwirklichen also das gleiche Lagerungsprinzip, wobei jedoch durchaus Unterschiede hinsichtlich der Dimensionierung einzelner Bauteile vorliegen können.

In noch einer weiteren bevorzugten Ausführungsform ist die in Fahrtrichtung gesehen vordere Gelenkanordnung vor dem Tretlager oder Antriebsmotor des Zweirades angeordnet, während die hintere Gelenkanordnung dahinter angeordnet ist. Hierdurch ergibt sich der Vorteil, dass der Abstand in Zweiradlängsrichtung zwischen den beiden Gelenkanordnungen relativ gross ist, so dass sich eine stabile Führung des Seitenwagens durch das Zweirad ergibt.

Werden Zweirad und Seitenwagen ausschliesslich durch die beiden Gelenkanordnungen verbunden, was bevorzugt ist, so lässt sich eine besonders kostengünstige Konstruktionsweise realisieren.

In noch einer weiteren bevorzugten Ausführungsform des Zweirades mit Seitenwagen sind die beiden Gelenkanordnungen derartig ausgebildet, dass sie gegebenenfalls nach einem Entfernen oder Entsichern etwaiger Sicherungsmittel, bevorzugterweise nach einem Öffnen einer Schnellkupplung oder nach dem Entfernen eines Riegelbolzens, ohne Werkzeug trennbar sind, um auf einfache und schnelle Weise eine Trennung von Zweirad und Seitenwagen zu ermöglichen.

In noch einer weiteren bevorzugten Ausführungsform ist das Zweirad ein Fahrrad mit Pedalen, mit oder ohne Hilfsmotor. Bei solchen Zweirädern treten die Vorteile der Erfindung besonders deutlich in Erscheinung.

Die Erfindung betrifft eine Gelenkanordnung, mittels derer, z.B. unter Verwendung zweier solcher Gelenkanordnungen, ein Zweirad mit einem Seitenwagen verbunden werden kann zu einem Zweirad mit Seitenwagen wie zuvor dargelegt. Die Gelenkanordnung umfasst einen bevorzugterweise zylindrischen Lagerbolzen, der in einem winkeltoleranten Radiallager um einen Neigungsdrehpunkt herum neigbar und axial verschieblich drehgelagert ist und der an seiner Stirnfläche einen Lagerteil eines einseitig wirkenden Axiallagers bildet, z.B. indem er dort eine axiale Lagerfläche bereitstellt oder ein eine solche Lagerfläche bereitstellendes Bauteil trägt. Dabei ist der Lagerbolzen, gegebenenfalls nach einem Lösen und/oder Entfernen von Sicherungsmitteln, entgegen der Tragrichtung des Axiallagers vollständig aus dem Radiallager entfernbar, so dass eine durch die Gelenkanordnung gebildeten Gelenkverbindung auf einfache Weise aufgehoben werden kann.

Das Axiallager der Gelenkanordnung ist ausserhalb der Radiallagers angeordnet und als Gleitlager mit sphärischen Gleitflächen ausgebildet, wobei das Zentrum der sphärischen Wölbung der Gleitflächen mit dem Neigungsdrehpunkt des Radiallagers zusammenfällt.

Durch die erfindungsgemässe Gelenkanordnung wird es möglich, ein Zweirad mit einem Seitenwagen auf robuste und sichere Weise derart zu verbinden, dass das Zweirad gegenüber dem Seitenwagen neigbar ist und eine Montage und Demontage des Seitenwagens problemlos durch eine einzelne Person möglich ist. Gleichzeitig lässt sich gewährleisten, dass unabhängig von der Neigung des Lagerbolzens immer die volle Tragfähigkeit in jeder Traglastrichtung gegeben ist.

In einer bevorzugten Ausführungsform der Gelenkanordnung ist das Radiallager als Gleitlager mit einer Lagerbuchse ausgebildet, welche mit einer sphärisch geformten Aussenfläche in einem entsprechend geformten Aufnahmeteil neigbar gelagert ist. Auf diese Weise ergibt sich eine besonders robuste Gelenkanordnung, welche unempfindlich gegen kleine Drehwinkel und gegen Stossbelastung ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 ein Fahrrad mit Seitenwagen in der Seitenansicht;
Fig. 2 das Fahrrad mit Seitenwagen aus Fig. 1 in der Draufsicht;
Fig. 3 das Detail X aus Fig. 1;
Fig. 4 eine Vorderansicht des Details X aus Fig. 1;
Fig. 5 einen Längsschnitt durch die erfindungsgemässen Gelenkanordnungen 3a und 3b aus Fig. 2;
Fig. 6 einen Längsschnitt durch eine weitere Ausführungsform einer erfindungsgemässen Gelenkanordnung.

### Wege zur Ausführung der Erfindung

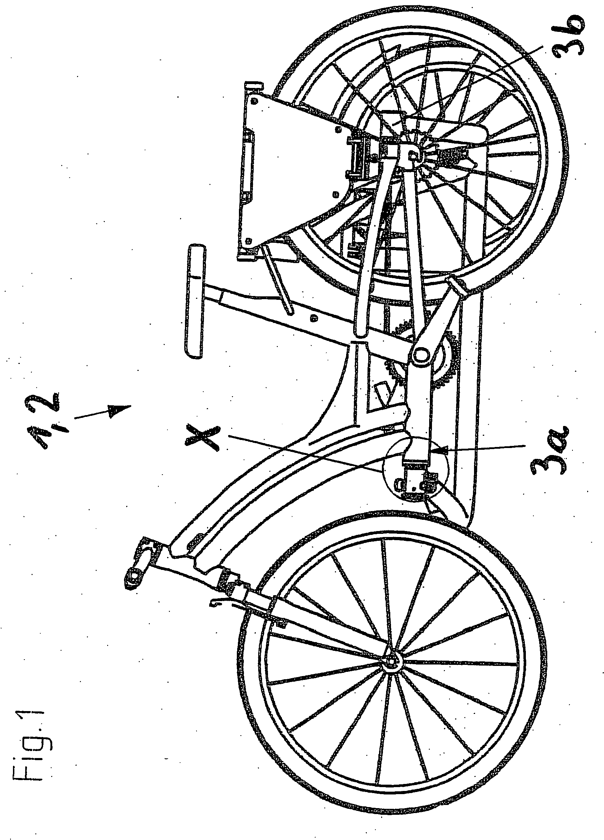

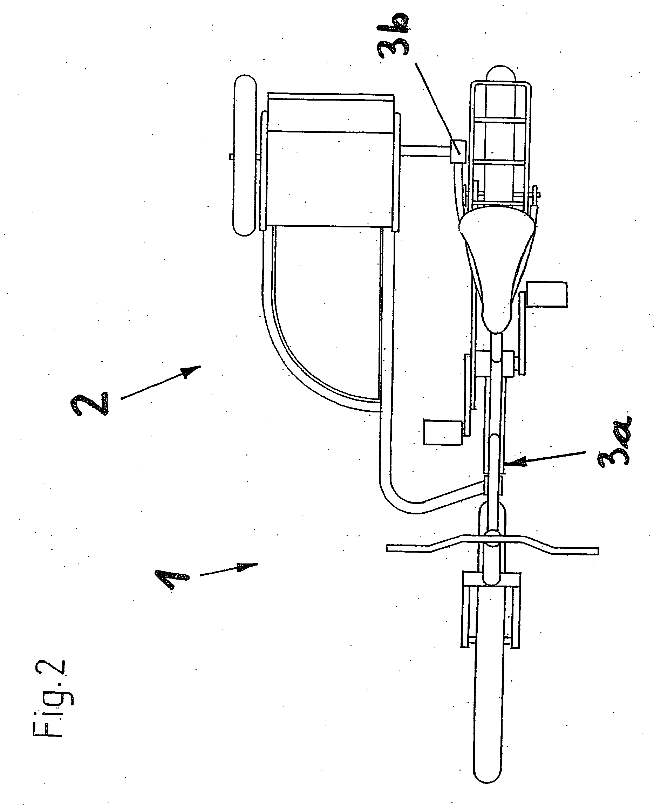

Fig. 1 zeigt eine Seitenansicht eines Zweirads mit Seitenwagen in Form eines Gespanns aus einem motorlosen Fahrrad 1 und einem Seitenwagen 2 von der seitenwagenfreien Seite. Fig. 2 zeigt dieses Gespann 1, 2 in der Draufsicht. Wie aus einer Zusammenschau der Figuren 1 und 2 erkennbar ist, sind das Fahrrad 1 und der Seitenwagen 2 über zwei in Fahrradlängsrichtung mit einem Abstand zueinander angeordnete winkeltolerante Gelenkanordnungen 3a, 3b derart miteinander verbunden, dass das Fahrrad 1 um eine im wesentlichen in Fahrradlängsrichtung orientierte und im wesentlichen horizontale Neigungsachse sowohl zum Seitenwagen 2 hin als auch von diesem weg geneigt werden kann und gleichzeitig eine Übertragung der im Betrieb, z.B. beim Beschleunigen und Abbremsen, in Fahrradlängsrichtung wirkenden Axialkräfte zwischen Fahrrad 1 und Seitenwagen 2 durch die Gelenkanordnungen 3a, 3b möglich ist.

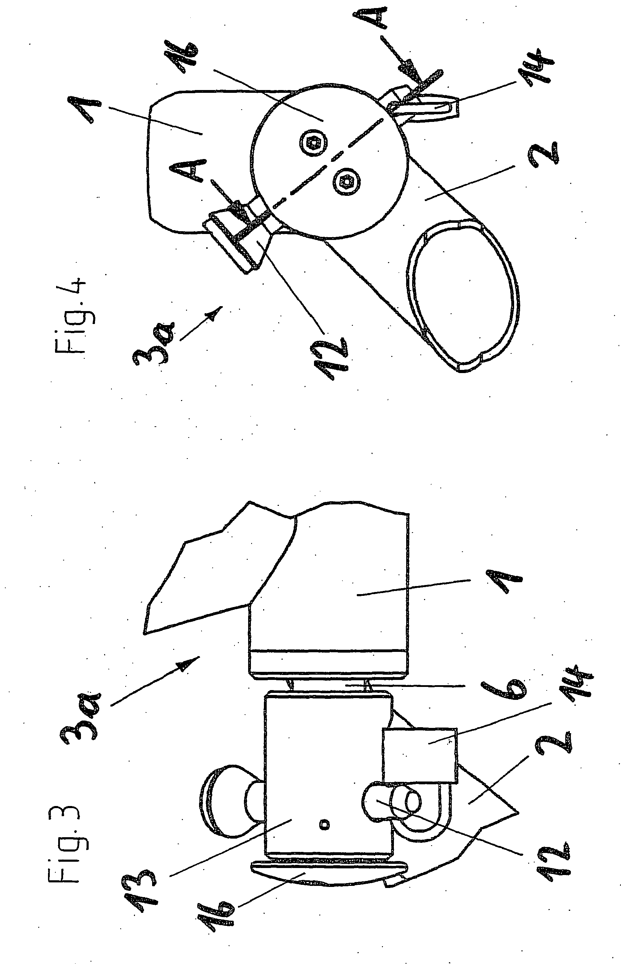

Die Figuren 3 und 4 zeigen das Detail X aus Fig. 1, welches die vordere Gelenkverbindung zwischen Fahrrad 1 und Seitenwagen 2 mit der Gelenkanordnung 3a darstellt, vergrössert in der Seitenansicht gemäss Fig. 1 (Fig. 3) und in der Vorderansicht (Fig. 4).

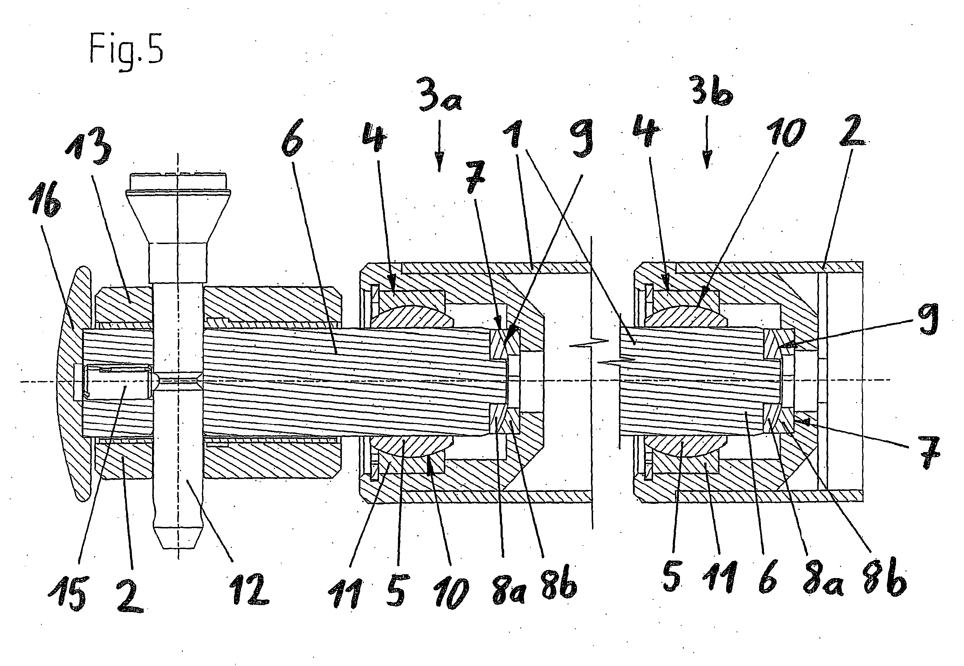

Fig. 5 zeigt einen Längsschnitt durch die beiden Gelenkanordnungen 3a, 3b, wobei die vordere Gelenkanordnung 3a entlang der Linie A-A in Fig. 4 geschnitten dargestellt ist. Wie aus einer Zusammenschau mit den Figuren 3 und 4 hervorgeht, wird bei der vorderen Gelenkanordnung 3a die eigentliche Verbindung zwischen Seitenwagen 2 und Fahrrad 1 über einen zur Gelenkanordnung 3a gehörenden Lagerbolzen 6 hergestellt, welcher in einer Aufnahme 13 am Ende eines Auslegers des Seitenwagens 2 angeordnet und dort mit einem Riegelbolzen 12 gesichert ist, derart, dass er nach einem Entfernen des Riegelbolzens 12 in Fahrtrichtung aus der Aufnahme 13 und aus der Gelenkanordnung 3a herausgezogen werden kann, um eine Trennung von Fahrrad 1 und Seitenwagen 2 zu ermöglichen. Hierauf wird an anderer Stelle noch genauer eingegangen.

Der Lagerbolzen 6 ist innerhalb der Gelenkanordnung 3a in einer Lagerbuchse 5 aus Kunststoff, z.B. aus Polyamid, drehbar gelagert, welche wiederum mit einer sphärisch gewölbten Aussenfläche 10 in einem entsprechend geformten Aufnahmeteil 11, hier ebenfalls aus Kunststoff, gelagert ist, derart, dass sie gegenüber dem Aufnahmeteil 11 neigbar um einen Neigungsdrehpunkt ist, der dem Zentrum der Wölbung der Aussenfläche 10 entspricht. Die Lagerbuchse 5 und das Aufnahmeteil 11 bilden im vorliegenden Fall das Radiallager 4 der Gelenkanordnung 3a. An der Stirnseite trägt der Lagerbolzen 6 eine Kunststoffscheibe 8a mit einer sphärisch geformten Gleitfläche 9, welche mit einer entsprechend geformten Gleitfläche einer gegenüberliegenden Lagerscheibe 8b, hier ebenfalls aus Kunststoff, das Axiallager 7 der Gelenkanordnung 3a bildet. Dabei ist, wie zu erkennen ist, der Wölbungsradius der sphärisch gewölbten Fläche 10 der Radiallagerbuchse 5 kleiner als derjenige der sphärisch gewölbten Axiallagergleitfläche 9, während deren Wölbungszentren indes identisch sind, so dass zu jeder Zeit die volle Tragfähigkeit in allen vorgesehenen Traglastrichtungen vorliegt und gleichzeitig eine klare Trennung der die Radialkräfte tragenden Flächen 10 von den die Axialkräfte tragenden Flächen 9 erfolgt.

Die in Fig. 5 auf der rechten Seite dargestellte hintere Gelenkanordnung 3b ist im vorliegenden Fall identisch mit der zuvor beschriebenen vorderen Gelenkanordnung 3a mit dem einzigen Unterschied, dass ihr Lagerbolzen 6 fest mit dem Rahmen des Fahrrads 1 verbunden ist.

Sollen Fahrrad 1 und Seitenwagen 2 bei dem zuvor beschriebenen Gespann 1, 2 voneinander getrennt werden, z.B. um das Fahrrad 1 vorübergehend ohne Seitenwagen 2 zu verwenden, so müssen die beiden Gelenkanordnungen 3a, 3b getrennt werden, was wie folgt bewerkstelligt werden kann. Zuerst wird das vorhängeschloss 14 (nur in den Figuren 3 und 4 dargestellt) an der vorderen Gelenkanordnung 3a, welches als Sicherung gegen ein unbeabsichtigtes bzw. unbefugtes Trennen der Gelenkanordnungen 3a, 3b dient, geöffnet und entfernt und anschliessend der Riegelbolzen 12, welcher zusätzlich mit einem Kugeldruckstück 15 kraftschlüssig in der dargestellten Verriegelungsposition gesichert ist, entfernt. Sodann wird der Lagerbolzen 6 der vorderen Gelenkanordnung 3a durch Ziehen an dem Knauf 16 in Fahrtrichtung nach vorne aus der Lagerbuchse 5 der vorderen Gelenkanordnung 3a herausgezogen und die vordere Gelenkverbindung zwischen Fahrrad 1 und Seitenwagen 2 dadurch aufgehoben. Nun wird das Fahrrad 1 im Bereich der vorderen Gelenkanordnung 3a seitlich ein wenig vom Seitenwagen 2 abgerückt und sodann in Fahrtrichtung nach vorne bewegt, wodurch der Lagerbolzen 6 der hinteren Gelenkanordnung 3b aus deren Lagerbuchse 5 herausgezogen und die Gelenkanordnung 3b dadurch ebenfalls getrennt wird. Fahrrad 1 und Seitenwagen 2 können anschliessend separat bewegt werden. Die Montage des Seitenwagens 2 am Fahrrad 1 erfolgt sinngemäss in umgekehrter Reihenfolge.

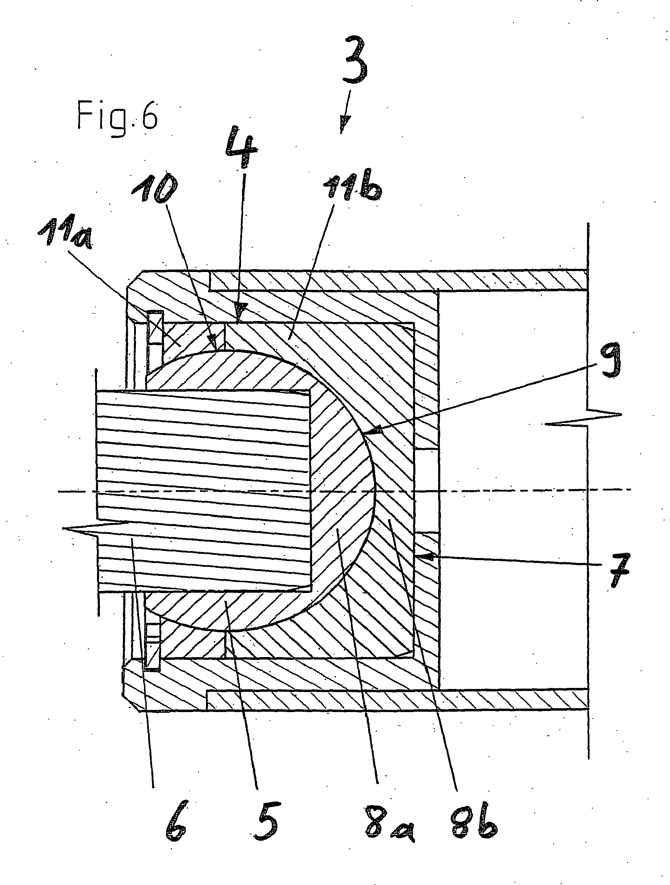

Fig. 6 zeigt einen Vertikalschnitt durch eine zweite erfindungsgemässe Gelenkanordnung 3, bei welcher der Lagerbolzen 6 in einer als Kugel ausgebildeten Lagerbuchse 5 drehbar und axial verschieblich entgegen der Axialtragrichtung der Gelenkanordnung 3 gelagert ist. Die Lagerbuchse 5 ist in einem entsprechend geformten, zweiteiligen Aufnahmeteil 11a, 11b, gelagert, derart, dass Lagerbuchse 5 und Aufnahmeteil 11a, 11b ein Kugelgelenk bilden, dessen radiale Körperlichkeiten entlang der radialen Kugelfläche 10 das Radiallager 4 und dessen axiale Körperlichkeiten 8a, 8b entlang der axialen Kugelfläche 9 das Axiallager 7 der Gelenkanordnung 3 bilden. Eine solche Bauweise ist einfach und robust und baut zudem extrem kurz.

Während in der vorliegenden Anmeldung bevorzugte Ausführungsformen der Erfindung beschrieben sind, ist klar darauf hinzuweisen, dass die Erfindung nicht auf diese beschränkt ist und in auch anderer Weise innerhalb des Umfangs der nun folgenden Ansprüche ausgeführt werden kann.

## Patentansprüche

1. Gelenkanordnung (3, 3a, 3b) zum Verbinden eines Zweirads (1) mit einem Seitenwagen (2) zu einem Zweirad mit Seitenwagen, bei dem das Zweirad (1) und der Seitenwagen (2) über zwei in Zweiradlängsrichtung voneinander beabstandete Gelenkanordnungen (3, 3a, 3b) miteinander verbunden sind, welche als Radiallager eine Neigung des Zweirades (1) gegenüber dem Seitenwagen (2) um eine im wesentlichen in Zweiradlängsrichtung verlaufende Neigungsachse ermöglichen und als Axiallager eine Übertragung von in Zweiradlängsrichtung wirkenden Axialkräften in beiden Kraftrichtungen zwischen Zweirad (1) und Seitenwagen (2) gewährleisten, wobei die Gelenkanordnungen (3, 3a, 3b) als winkeltolerante Gelenkanordnungen (3, 3a, 3b) mit jeweils nur einer Axialtragrichtung ausgebildet sind, umfassend einen insbesondere zylindrischen Lagerbolzen (6), der in einem winkeltoleranten Radiallager (4) um einen Neigungsdrehpunkt herum neigbar und axial verschieblich drehgelagert ist und an seiner Stirnfläche einen Lagerteil eines einseitig wirkenden Axiallagers (7) bildet, wobei der Lagerbolzen (6) derartig ausgebildet ist, dass er, gegebenenfalls nach einem vorherigen Lösen oder Entfernen von Sicherungsmitteln (12), entgegen der Tragrichtung des Axiallagers (7) vollständig aus dem Radiallager (4) herausziehbar ist, zur Ermöglichung eines Trennens einer durch die Gelenkanordnung (3, 3a, 3b) gebildeten Gelenkverbindung, **dadurch gekennzeichnet, dass** das Axiallager (7) der Gelenkanordnung (3, 3a, 3b) ausserhalb des Radiallagers (4) angeordnet und als Gleitlager mit einer sphärischen Gleitfläche (9) ausgebildet ist, wobei das Wölbungszentrum der Gleitfläche (9) mit dem Neigungsdrehpunkt des Radiallagers (4) zusammenfällt.

2. Gelenkanordnung nach Anspruch 1, **dadurch gekennzeichnet, dass** das Radiallager (4) als Gleitlager mit einer Lagerbuchse (5) ausgebildet ist, in welcher der Lagerbolzen (6) gelagert ist und welche mit einer sphärisch geformten Aussenfläche (10) in einem entsprechend geformten Aufnahmeteil (11, 11a, 11b) neigbar gelagert ist.

3. Gelenkanordnung nach Anspruch 2, **dadurch gekennzeichnet, dass** der Radius der Wölbung der Aussenfläche (10) der Lagerbuchse (5) kleiner ist als der Radius der Wölbung der Gleitfläche (9) des Axiallagers (7).
